# EUROPEAN PATENT APPLICATION

(11) **EP 4 641 468 A1**
(43) Date of publication of application: **29.10.2025**
(21) Application number: 24862812.5
(22) Date of filing: 04.09.2024
(51) Int. Cl.: G06Q 30/0203, G06Q 10/00

(54) **INFORMATION PROVISION DEVICE, METHOD, AND PROGRAM**

(30) Priority: 08.09.2023 JP 2023146430
(71) Applicant: Fancrew Inc., Tokyo 101-0032 (JP)
(72) Inventor: YAMAGUCHI, Takato, Tokyo 101-0032 (JP); TOKUDA, Shuji, Tokyo 101-0032 (JP); KUROKI, Katsumi, Tokyo 101-0032 (JP)
(74) Representative: Gulde & Partner
(86) International application number: PCT/JP2024/031658
(87) International publication number: WO 2025/053160

(57) **Abstract**

Provided is an information providing device, a method, and a program capable of visually grasping a contribution degree of an evaluation factor with respect to a contract intention or a recommendation intention for others of a customer. An information providing device includes: a survey data acquisition means configured to acquire evaluation data including evaluation values for evaluation items for a target product or service, the evaluation data including evaluation values for a plurality of evaluation items related to a contract intention or a recommendation intention for others; a multivariate analysis means configured to calculate contribution degrees of a plurality of explanatory variables with respect to an objective variable by conducting a multivariate analysis based on the evaluation data using an evaluation value for the contract intention or the recommendation intention for others as the objective variable, and evaluation values for a plurality of evaluation items in the evaluation data as the explanatory variables; and an analysis result output means configured to display an analysis result from the multivariate analysis means on an information terminal capable of communicating via a network.

## Description

### TECHNICAL FIELD

The present invention relates to an information providing device, a method, and a program for providing information contributing to a contract intention, a revisit intention, a repurchase intention, or a recommendation intention for others of a customer. In this specification, the "customer" includes a potential customer, and "sales" includes field sales and inside sales. In addition, in this specification, the term "contract intention" is used to have a meaning including an introduction intention of a customer who has yet to introduce a product (including a software product) and a continuous use intention (or a contract renewal intention) of a customer who has introduced a product. The program according to the present invention is software executable on a computer and can be stored in a computer-readable storage medium, such as a CD-ROM, DVD, USB flash drive, HDD, and Solid State Drive (SSD). Target stores in the present invention include not only physical stores (real stores) but also stores in virtual spaces.

### BACKGROUND ART

Conventionally, questionnaires are aggregated to analyze the correlation between product or service attributes and sales performance, and the analysis results are reflected in the development of products or services.

In addition, barriers to purchasing behavior for products or services by customers are also analyzed. For example, Patent Document 1 proposes an information processing apparatus that includes an expected value acquisition means configured to acquire an expected value indicating the degree of purchase intent or purchase prospect for a product or service by customers, a related value acquisition means configured to acquire a related value indicating an element that affects the sales of the product or service, a sales value acquisition means configured to acquire a sales value indicating the degree of sales of the product or service, a coefficient calculation means configured to calculate an expected value coefficient indicating the degree of influence of the purchase intent or purchase prospect on the sales of the product or service by computing an expression indicating that the sales value is dependent on the expected value and the related value weighted by the expected value coefficient.

Patent Document 1: JP-A-2011-215673

### DISCLOSURE OF THE INVENTION

### PROBLEMS TO BE SOLVED BY THE INVENTION

In the conventional methods, the simply aggregated survey results and questionnaire results are displayed, and it was not possible to determine which factors contributed to the customers' intention to subscribe, revisit, repurchase, or recommend for others, or the extent to which each factor contributed. In addition, a display means is desired not only for calculating contribution degrees of evaluation factors with high accuracy but also for easily grasping them.

It is an object of the present invention to provide an information providing device, a method, and a program capable of visually grasping a contribution degree of an evaluation factor with respect to a contract intention, a revisit intention, a repurchase intention, or a recommendation intention for others of a customer.

### SOLUTIONS TO THE PROBLEMS

The inventors invented an information providing device and a program capable of easily grasping an effective solution to improve customers' introduction intention, revisit intention, repurchase intention, or recommendation intention by conducting a factor analysis of an evaluation element expected to be effective on customers' contract intention, revisit intention, repurchase intention, or recommendation intention for others, then collecting a statistically significant number of customer evaluations, and conducting a statistical analysis.

An information providing device according to a first aspect of the present invention includes the following technical means.
[1] An information providing device includes: a survey data acquisition means configured to acquire evaluation data including evaluation values for evaluation items for a target product or service, the evaluation data including evaluation values for a plurality of evaluation items related to a contract intention; a multivariate analysis means configured to calculate contribution degrees of a plurality of explanatory variables with respect to an objective variable by conducting a multivariate analysis based on the evaluation data using an evaluation value for the contract intention as the objective variable, and evaluation values for a plurality of evaluation items in the evaluation data as the explanatory variables; and an analysis result output means configured to display an analysis result from the multivariate analysis means on an information terminal capable of communicating via a network. The evaluation data includes an evaluation item of a first level corresponding to the objective variable, evaluation items of a second level that explain the objective variable, and evaluation items of a third level that explain evaluation items of the second level, and the multivariate analysis means is configured to execute a first multivariate analysis using an evaluation value for an evaluation item of the second level as an intermediate objective variable, and evaluation items of the third level as explanatory variables, and execute a second multivariate analysis using an evaluation item of the first level as an objective variable and evaluation items of the second level as explanatory variables.
[2] The information providing device according to [1], wherein the analysis result output means is configured to display the plurality of explanatory variables on the information terminal with figures of sizes corresponding to the contribution degrees.
[3] The information providing device according to [1] or [2] further includes a correlation analysis means configured to calculate a relevance between the plurality of explanatory variables. The analysis result output means is configured to display a line connecting a pair of the explanatory variables on the information terminal, the line having a thickness and/or type according to a strength of the relevance.
[4] The information providing device according to any one of [1] to [3] further includes a reference value setting means configured to set a reference value for each of the plurality of explanatory variables. The analysis result output means is configured to display the explanatory variables colored in different colors according to a difference with respect to the reference value.
[5] The information providing device according to [4] in which the reference value setting means includes a function to calculate an average value for a rating in an identical or similar business type and business category calculated for each of the plurality of explanatory variables and set the average value as the reference value.
[6] The information providing device according to [4] or [5] in which the analysis result output means is configured to color the explanatory variables in a first color when the explanatory variables are higher than the reference value and color the explanatory variables in a second color different from the first color when the explanatory variables are lower than the reference value.
[7] The information providing device according to any one of [1] to [6] in which the analysis result output means is configured to radially arrange the figures to display the arranged figures.
[8] The information providing device according to any one of [1] to [7] in which evaluation items of the third level are evaluation items of a subordinate concept of evaluation items of the second level.

An information providing method according to the first aspect of the present invention includes the following technical means.

[9] An information providing method executed by a computer includes: a step of acquiring evaluation data including evaluation values for evaluation items for a target product or service, the evaluation data including evaluation values for a plurality of evaluation items related to a contract intention; a step of calculating an evaluation value for the contract intention based on the evaluation data; a multivariate analysis step of calculating contribution degrees of a plurality of explanatory variables with respect to an objective variable by conducting a multivariate analysis using an evaluation value for the contract intention as the objective variable, and evaluation values for a plurality of evaluation items in the evaluation data as the explanatory variables; and an analysis result output step of displaying an analysis result in the multivariate analysis step on an information terminal capable of communicating via a network. The evaluation data includes an evaluation item of a first level corresponding to the objective variable, evaluation items of a second level that explain the objective variable, and evaluation items of a third level that explain evaluation items of the second level, and the multivariate analysis step includes executing a first multivariate analysis using an evaluation value for an evaluation item of the second level as an intermediate objective variable, and evaluation values for evaluation items of the third level as explanatory variables, and executing a second multivariate analysis using an evaluation value for an evaluation item of the first level as an objective variable, and evaluation values for evaluation items of the second level as explanatory variables.

A program according to the first aspect of the present invention includes the following technical means.

[10] A program causes a computer to function as: a means for acquiring evaluation data including evaluation values for evaluation items for a target product or service, the evaluation data including evaluation values for a plurality of evaluation items related to a contract intention; a means for calculating an evaluation value for the contract intention based on the evaluation data; a multivariate analysis means for calculating contribution degrees of a plurality of explanatory variables with respect to an objective variable by conducting a multivariate analysis using an evaluation value for the contract intention as the objective variable, and evaluation values for a plurality of evaluation items in the evaluation data as the explanatory variables; and an analysis result output means for displaying an analysis result from the multivariate analysis means on an information terminal capable of communicating via a network. The evaluation data includes an evaluation value for an evaluation item of a first level corresponding to the objective variable, evaluation values for evaluation items of a second level that explain the objective variable, and evaluation values for evaluation items of a third level that explain evaluation items of the second level, and the multivariate analysis means includes executing a first multivariate analysis using an evaluation value for an evaluation item of the second level as an intermediate objective variable, and evaluation values for evaluation items of the third level as explanatory variables, and executing a second multivariate analysis using an evaluation value for an evaluation item of the first level as an objective variable, and evaluation values for evaluation items of the second level as explanatory variables.

An information providing device according to a second aspect of the present invention includes the following technical means.
[1] An information providing device including a survey data acquisition means, a multivariate analysis means, and an analysis result output means. The survey data acquisition means is configured to acquire evaluation data including evaluation values and evaluation attributes for evaluation items for a target product or service. The evaluation data includes evaluation values for a plurality of evaluation items related to a revisit intention, repurchase intention, or recommendation intention for others. The multivariate analysis means is configured to calculate contribution degrees of a plurality of explanatory variables with respect to an objective variable by conducting a multivariate analysis based on the evaluation data using an evaluation value for the revisit intention, repurchase intention, or recommendation intention for others as the objective variable, and evaluation values for a plurality of evaluation items in the evaluation data as the explanatory variables. The analysis result output means is configured to display an analysis result from the multivariate analysis means on an information terminal capable of communicating via a network. The multivariate analysis means is configured to divide the evaluation data into a plurality of groups according to selected evaluation attributes and calculate the contribution degrees of the explanatory variables in a selected group with respect to the objective variable.
[2] The information providing device described in [1], in which the evaluation attributes include age or generation, gender, earnings or income, and/or resident area of a person to be evaluated.
[3] The information providing device described in [1] or [2], in which the evaluation attributes include a name of a store that provides the target service.
[4] The information providing device described in any of [1] to [3], in which the analysis result output means is configured to display the plurality of explanatory variables on the information terminal with figures of sizes corresponding to the contribution degrees.
[5] The information providing device described in [4], in which the analysis result output means is configured to radially arrange the figures at equal intervals to display them on the information terminal.
[6] The information providing device described in [4] or [5] further including a correlation analysis means configured to calculate a relevance between the plurality of explanatory variables. In the information providing device, the analysis result output means is configured to display a line connecting a pair of the explanatory variables on the information terminal. The line has a thickness and/or type according to a strength of the relevance.
[7] The information providing device described in [4] further including a correlation analysis means configured to calculate a relevance between the plurality of explanatory variables. In the information providing device, the analysis result output means is configured to arrange the figures at vertices of a regular polygon to display them on the information terminal and configured to display a line connecting a pair of the explanatory variables on the information terminal. The line has a thickness and/or type according to a strength of the relevance.
[8] The information providing device described in any of [4] to [7], in which the figures are circles, polygons, or illustrations.
[9] The information providing device described in any of [4] to [8], in which when a relevance of a pair of the figures is less than a predetermined value, a line connecting the pair of the figures is not displayed on the information terminal.
[10] The information providing device described in any of [1] to [6], in which the multivariate analysis means is configured to calculate the contribution degrees of the explanatory variables in two selected groups with respect to the objective variable, and the analysis result output means is configured to display analysis results of the two selected groups from the multivariate analysis means side by side.

An information providing method according to the second aspect of the present invention includes the following technical means.

[11] An information providing method executed by a computer. The method includes: a step of acquiring evaluation data including evaluation values and evaluation attributes for evaluation items for a target product or service, the evaluation data including evaluation values for a plurality of evaluation items related to a revisit intention, repurchase intention, or recommendation intention for others; a multivariate analysis step of calculating contribution degrees of a plurality of explanatory variables with respect to an objective variable by conducting a multivariate analysis based on the evaluation data using an evaluation value for the revisit intention, repurchase intention, or recommendation intention for others as the objective variable, and evaluation values for a plurality of evaluation items in the evaluation data as the explanatory variables; and an analysis result output step of displaying an analysis result in the multivariate analysis step on an information terminal capable of communicating via a network. **In** the multivariate analysis step, the evaluation data is divided into a plurality of groups according to selected evaluation attributes, and the contribution degrees of the explanatory variables in a selected group with respect to the objective variable are calculated.

A program according to the second aspect of the present invention includes the following technical means.

[12] A program that causes a computer to function as: a survey data acquisition means for acquiring evaluation data including evaluation values and evaluation attributes for evaluation items for a target product or service, the evaluation data including evaluation values for a plurality of evaluation items related to a revisit intention, repurchase intention, or recommendation intention for others; a multivariate analysis means for calculating contribution degrees of a plurality of explanatory variables with respect to an objective variable by conducting a multivariate analysis based on the evaluation data using an evaluation value for the revisit intention, repurchase intention, or recommendation intention for others as the objective variable, and evaluation values for a plurality of evaluation items in the evaluation data as the explanatory variables; and an analysis result output means for displaying an analysis result from the multivariate analysis means on an information terminal capable of communicating via a network. The multivariate analysis means includes dividing the evaluation data into a plurality of groups according to selected evaluation attributes and calculating the contribution degrees of the explanatory variables in a selected group with respect to the objective variable.

### EFFECTS OF THE INVENTION

According to the present invention, the contribution degree of each evaluation factor with respect to a contract intention, a revisit intention, a repurchase intention, or a recommendation intention for others of a customer can be easily grasped.

### BRIEF DESCRIPTION OF THE DRAWINGS

Fig. 1 is a block diagram of an information providing system according to a first embodiment.
Fig. 2 is a drawing describing functions of an information providing device according to the first embodiment.
Fig. 3 is a drawing describing a question structure of a survey sheet for a questionnaire survey in the first embodiment.
Fig. 4 is a drawing illustrating an exemplary survey sheet for the questionnaire survey in the first embodiment.
Fig. 5 is a drawing illustrating an analysis result indicating contribution degrees of respective explanatory variables with respect to an "introduction intent" in a survey result for the survey sheet in Fig. 4.
Fig. 6 is a drawing illustrating correlation coefficients between the respective explanatory variables in Fig. 4.
Fig. 7 is a drawing graphically and radially displaying the contribution degrees of the respective explanatory variables and the correlation coefficients between the respective explanatory variables in Fig. 4 by an analysis result output means according to the first embodiment.
Fig. 8 is a drawing illustrating an exemplary survey sheet for a monitoring survey in a second embodiment.
Fig. 9 is a drawing illustrating an exemplary survey sheet for a questionnaire survey in the second embodiment.
Fig. 10 is a drawing describing a multivariate analysis means according to the second embodiment.
Fig. 11 is a drawing illustrating an analysis result indicating contribution degrees of respective explanatory variables with respect to a revisit intention in a specific eating place according to the second embodiment.
Fig. 12 is a drawing illustrating an analysis result indicating contribution degrees of respective explanatory variables with respect to a revisit intention in a specific hair salon according to the second embodiment.
Fig. 13 is a drawing illustrating an analysis result indicating contribution degrees of respective explanatory variables with respect to a revisit intention in an eating place different from that of Fig. 11 according to the second embodiment.
Fig. 14 is a drawing illustrating an analysis result indicating contribution degrees of the respective explanatory variables with respect to the revisit intention when only the survey data for people in their twenties are extracted from Fig. 13.
Fig. 15 is a drawing illustrating an analysis result indicating contribution degrees of the respective explanatory variables with respect to the revisit intention when only the survey data for people in their thirties are extracted from Fig. 13.
Fig. 16 is a drawing graphically and radially displaying the contribution degrees of the respective explanatory variables and the correlation coefficients between the respective explanatory variables in Fig. 13 by an analysis result output means according to the second embodiment.
Fig. 17 is a drawing graphically and radially displaying the contribution degrees of the respective explanatory variables and the correlation coefficients between the respective explanatory variables in Fig. 14 by the analysis result output means according to the second embodiment.
Fig. 18 is a drawing graphically and radially displaying the contribution degrees of the respective explanatory variables and the correlation coefficients between the respective explanatory variables in Fig. 15 by the analysis result output means according to the second embodiment.
Fig. 19 is a drawing illustrating an analysis result indicating contribution degrees of respective explanatory variables with respect to a repurchase intention in a specific beverage according to a third embodiment.
Fig. 20 is a drawing graphically and radially displaying the contribution degrees of the respective explanatory variables and the correlation coefficients between the respective explanatory variables in Fig. 19 by an analysis result output means according to the third embodiment.
Fig. 21 is a drawing illustrating an analysis result indicating contribution degrees of the respective explanatory variables (however, excluding a perceived fit) with respect to the repurchase intention when only the survey data for males are extracted from Fig. 19.
Fig. 22 is a drawing graphically and radially displaying the contribution degrees of the respective explanatory variables and the correlation coefficients between the respective explanatory variables in Fig. 21 by the analysis result output means according to the third embodiment.
Fig. 23 is a drawing illustrating an analysis result indicating contribution degrees of the respective explanatory variables (however, excluding the perceived fit) with respect to the repurchase intention when only the survey data for people aged under 40 are extracted from Fig. 19.
Fig. 24 is a drawing graphically and radially displaying the contribution degrees of the respective explanatory variables and the correlation coefficients between the respective explanatory variables in Fig. 23 by the analysis result output means according to the third embodiment.
Fig. 25 is a drawing illustrating an analysis result indicating contribution degrees of the respective explanatory variables (however, excluding the perceived fit) with respect to the repurchase intention when only the survey data for people aged 40 and above are extracted from Fig. 19.
Fig. 26 is a drawing graphically and radially displaying the contribution degrees of the respective explanatory variables and the correlation coefficients between the respective explanatory variables in Fig. 25 by the analysis result output means according to the third embodiment.

### DESCRIPTION OF PREFERRED EMBODIMENTS

### <First Embodiment>

An information providing system 1 of a first embodiment is configured to easily grasp evaluation factors that affect customers' contract intention or recommendation intention for others by conducting a multivariate analysis using a result of a questionnaire survey for customers who have received sales from a specific company and displaying the evaluation factors with numerical values or graphical figures. The information providing system 1 of the first embodiment has a configuration described below.

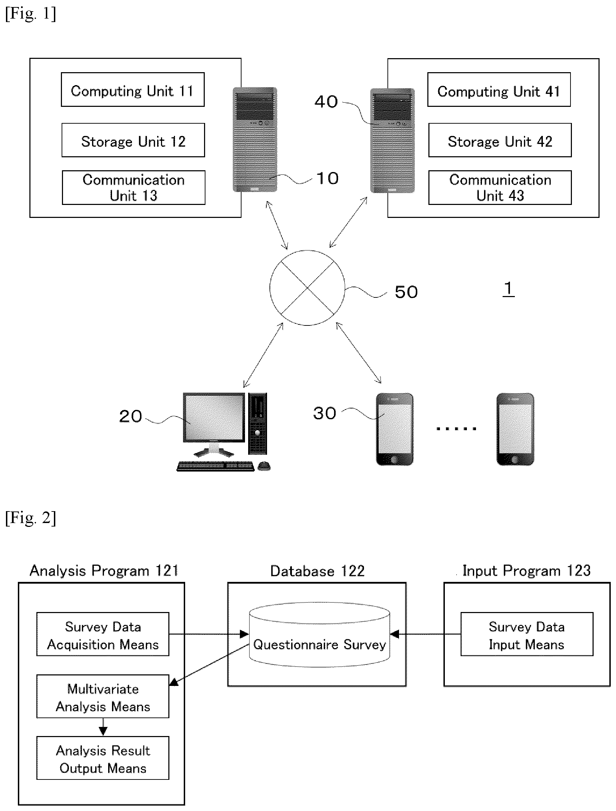

Fig. 1 is a block diagram of the information providing system according to the embodiment. As illustrated in Fig. 1, the information providing system 1 according to the embodiment includes an information providing device 10 that functions as a server, a management information terminal 20 that functions as a management client, an information terminal 30 that a questionnaire respondent uses, a survey data collecting device 40, and Internet 50. In the example illustrated in Fig. 1, while the numbers of the information providing devices 10, the management information terminals 20, and the survey data collecting devices 40 are each one, the configuration is not limited thereto, and the numbers thereof may be each two or more.

The information providing device 10 is, for example a PC server, and includes a computing unit 11, a storage unit 12 that stores an analysis program 121, and a communication unit 13 that allows communication with the information terminal 30 and the survey data collecting device 40.

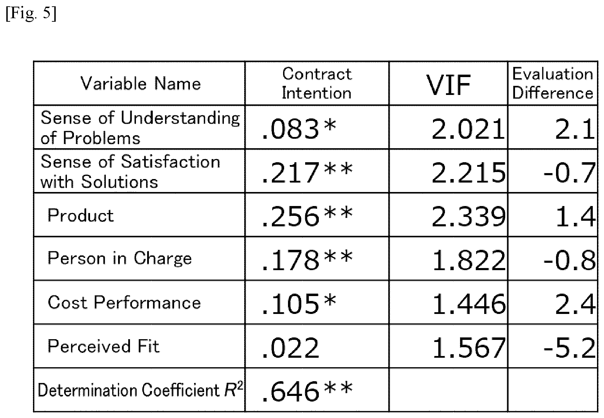

The management information terminal 20 is an information terminal for performing data input operations to the information providing device 10 and the survey data collecting device 40 and execution operations of the analysis program 121 and a survey data collection program 141, and is, for example, a personal computer. By executing the analysis program 121 described below from the management information terminal 20, a user can output various analysis results (for example, Fig. 5 to Fig. 7) to a display device of the management information terminal 20.

The information terminal 30 is an information terminal that the questionnaire respondent uses, and is used for inputting survey data to a database 122. In the example of Fig. 1, while the information terminal 30 as a smartphone is disclosed, the information terminal 30 is not limited thereto and can be configured of any information terminal, such as a personal computer and a tablet, which runs a web browser.

The survey data collecting device 40 is, for example a PC server, and includes a computing unit 41, a storage unit 42 that stores the database 122 and an input program 123, and the communication unit 13 that allows communication with the information providing device 10 and the information terminal 30. The input program 123 includes a survey data input means that provides the database 122 with a web page allowing an input of survey data from the information terminal 30.

In this embodiment, survey data is acquired by inputting responses to questionnaires via a web browser on the information terminal 30, using the input program 123. However, it is also possible to employ a configuration in which survey data collected through other means, such as a paper medium, is processed and uploaded to the database 122 from the management information terminal 20.

As illustrated in Fig. 2, the computing unit 11 of the information providing device 10 executes the analysis program 121 stored in the storage unit 12, thereby achieving (1) a survey data acquisition means, (2) a multivariate analysis means, and (3) an analysis result output means. The following describes each of the means.

### (1) Survey Data Acquisition Means

The survey data acquisition means is a means for storing the survey data used in the multivariate analysis means in the storage unit 12. In the embodiment, a screen to which a query for acquiring the survey data from the database 122 is input is provided to the management information terminal 20. The survey data in the embodiment includes survey data from a questionnaire about customers' introduction intention.

The questionnaire survey in the embodiment is a questionnaire for customers with predetermined evaluation items and includes questions appropriate for conducting a multivariate analysis. The questionnaire survey is conducted on a plurality of people belonging to companies that have received sales of a target product (including those who do not have the authority to conclude contracts).

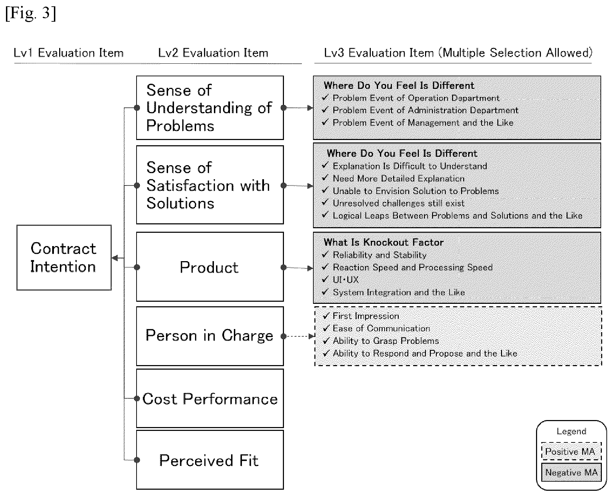

Fig. 3 is a drawing describing a question structure of a survey sheet for the questionnaire survey in the embodiment.

A first level evaluation item is a question to calculate a score of an objective variable in a multiple regression analysis, which asks whether a contract intention arose as a result of receiving sales. Here, the first level evaluation item may be targeted at companies that have yet to introduce a target product, or may be targeted at companies that have introduced the target product. The contract intention as the first level evaluation item means an introduction intention in the former case, and it means a contract continuation intention (contract renewal intention) in the latter case. In addition, as a first level evaluation item, a question to ask whether a respondent has an intention to recommend introducing the target product to others (recommendation intention for others) may be provided.

A second level evaluation item is an evaluation factor of the first level evaluation item and is an explanatory variable when the multiple regression analysis is conducted using the first level evaluation item as a dependent variable. For example, in order to evaluate a sense of understanding of problems, a question is provided to ask whether a respondent feels that the essence of the problems of the company to which the respondent belongs has been shown (anew). In order to evaluate a sense of satisfaction with solutions, a question is provided to ask whether the respondent feels that the proposed solutions seem to change the situation drastically.

A third level evaluation item is an evaluation factor of the second level evaluation item. A second level question and a third level question are provided to be in a relation of a superordinate concept and a subordinate concept. In Fig. 3, questions enclosed in a solid line are, for example, those to which multiple-selection answers (MA) for negative elements are given, and questions enclosed in a dotted line are, for example, those to which multiple-selection answers (MA) for positive elements are given. Here, the third level questions are not limited to the examples illustrated in Fig. 3 but can be a combination of questions to evaluate any negative and positive elements.

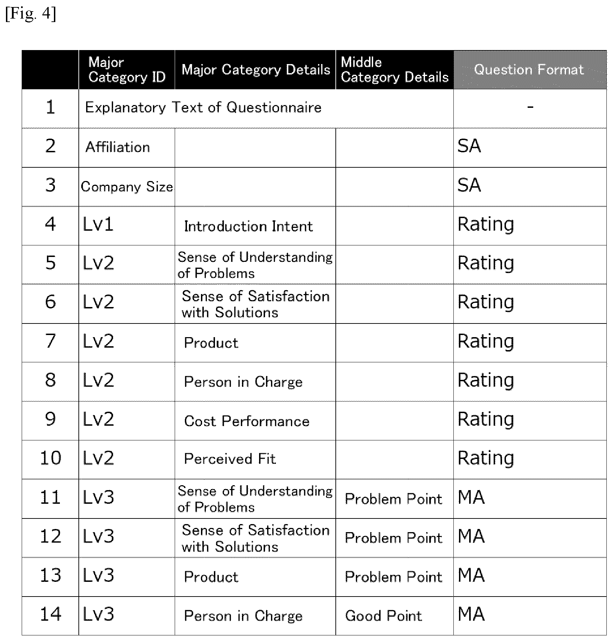

Fig. 4 is a drawing illustrating an exemplary survey sheet for a questionnaire survey.

At the beginning of the questionnaire survey sheet, a statement explaining that the answer details will be used for sales activities and service improvement purposes is described.

The questions with item numbers 2 and 3 are questions to ask about customer attribute elements and may be used to conduct an analysis by customer segment. Here, a question format SA means a format to select only one option from an answer field to answer.

A first level question (item number 4) asks about the introduction intent (contract intention) of a target product and is a multi-level evaluation. The product according to the embodiment is software for project management.

Second level questions (item numbers 5 to 10) are questions that become explanatory variables for the first level question, and all of them are multi-level evaluations. For example, the question about cost performance is a question that asks whether performance or the like is commensurate with price, and the question about perceived fit is a question that asks whether a questionnaire respondent feels that the product fits the company of the questionnaire respondent.

The perceived fit in the embodiment is a preference structure of a respondent expressed as a variable, for example, a preference of a respondent for an object, a feeling of preference to an option ***b*** over an option ***a*** of a respondent, an efficacy ***b*** greater than an efficacy ***a***. By including the perceived fit considering the preference of the respondent in the evaluation items, a function that allows outputting a correlation between the perceived fit and the clustered respondent attribute may be provided to the multivariate analysis means described below.

Third level questions (item numbers 11 to 14) are questions used as evaluation factors for the second level questions. In Fig. 4, a question format MA means a format to select one or a plurality of options from the answer field to answer. As the third level questions, questions that correspond to the subordinate concepts of the second level questions are preferably provided. For example, the question about the sense of satisfaction with solutions can include options, such as explanations being difficult to understand, logical leaps existing between problems and solutions, and a lack of examples. The question about the product can include options, such as reliability, processing speed, and operability.

### (2) Multivariate Analysis Means

The multivariate analysis means of the embodiment analyzes how the respective evaluation items affect the score of the contract intention by a multiple regression analysis. Here, the regression analysis is a statistical method for clarifying a relation between a value indicating a result (objective variable) and a value as a factor (explanatory variable), and the multiple regression analysis means a statistical method for predicting the future by quantifying which explanatory variable influences the result and to what extent, when explaining the objective variable.

Quantifying the magnitudes of the influence of the explanatory variables through the multiple regression analysis facilitates designing a method for improving a service. Further, the future of the variation of the objective variable due to the expected variation of the explanatory variables can be predicted.

Fig. 5 is a drawing illustrating an analysis result indicating contribution degrees of the respective explanatory variables with respect to the objective variable in survey data related to the survey sheet in Fig. 4. The objective variable in Fig. 5 is the introduction intent (introduction intention), and the explanatory variables are the respective questions of the second level. In the example illustrated in Fig. 5, it is seen that the "product" is the highest in contribution degree with respect to the introduction intention, and the contribution degree of the "sense of satisfaction with solutions" is the next highest. Since the values of VIF of the respective explanatory variables are not large, it is seen that the problem of multicollinearity has not occurred. Here, Variance Inflation Factor (VIF) is an indicator in an evaluation of multicollinearity in the multiple regression analysis. The multicollinearity indicates a high relevance between the explanatory variables, and when the VIF has a large value, it is considered that the variable is to be removed from the analysis.

In addition, in Fig. 5, since a determination coefficient R² is .646, it can be said that the analysis provides a sufficient explanatory power. Here, the determination coefficient (R²) is an indicator that indicates how the predicted value of the objective variable obtained through the multiple regression analysis matches the actual value of the objective variable. Generally, the closer the determination coefficient is to 1, the higher the explanatory power is.

Furthermore, the multivariate analysis means has a function to calculate a difference value of each explanatory variable with respect to a reference rating. In Fig. 5, the difference value of each explanatory variable with respect to an average rating for all customers is calculated. By looking at the difference value, it can be seen whether the scores for the respective evaluation items of the target customers for the analysis are lower or higher than those of all customers. The average rating of any selected group can be scored as the reference rating. For example, the average rating in the same business type may be employed as the reference rating.

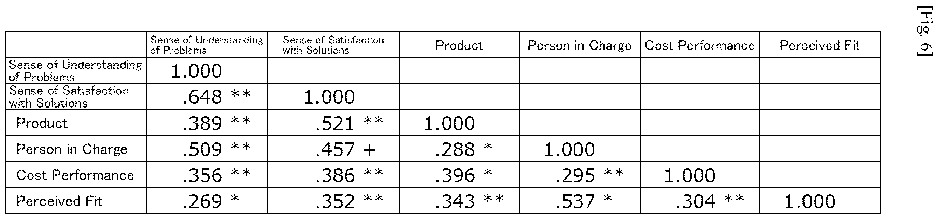

Fig. 6 is a drawing illustrating correlation coefficients between the evaluation factors of the second level in Fig. 5. For example, since the correlation coefficient between the sense of satisfaction with solutions and the sense of understanding of problems is .648, it can be seen that there is a high correlation between both. Therefore, the relation is such that when the evaluation of one becomes better, the evaluation of the other also becomes better. Conversely, when the evaluation of one becomes worse, the evaluation of the other also becomes worse. Thus, calculating the correlation coefficients between the evaluation factors of the second level facilitates examining the solutions necessary to increase the introduction intention.

### (3) Analysis Result Output Means

The analysis result output means of the embodiment is configured to visually grasp the contribution degrees of the explanatory variables with respect to the customers' contract intention by outputting the analysis result in a tabular format as illustrated in Figs. 5 and 6 and graphically displaying the contribution degrees.

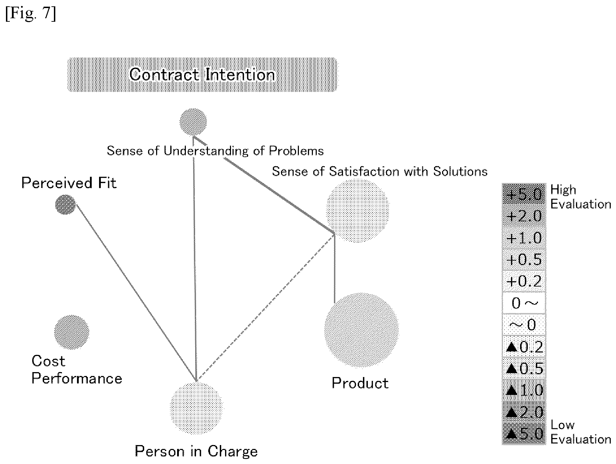

Fig. 7 is a drawing graphically displaying the contribution degrees of the respective explanatory variables with respect to the introduction intent (introduction intention) illustrated in Fig. 5 and the correlation coefficients between the respective explanatory variables by the analysis result output means. Circles corresponding to the respective explanatory variables are arranged at the vertices of a regular hexagon positioned below the contract intention. In the embodiment, the circles corresponding to the respective explanatory variables are arranged at the vertices of the regular hexagon. However, the drawing method is not limited thereto, and the circles may be arranged at the vertices of any regular polygon according to the number of explanatory variables, or may be arranged at equal intervals on a circumference.

In Fig. 7, an explanatory variable with a high contribution degree with respect to the introduction intention is displayed in a large circle, while an explanatory variable with a low contribution degree is displayed in a small circle. In the embodiment, the size of the circle is a size proportional to the contribution degree. However, when the contribution degree is equal to or less than a certain level, the circle is drawn with a predefined minimum radius so as not to have a size equal to or less than the minimum radius. Nevertheless, the size of the circle does not necessarily have a proportional relation to the value of the contribution degree, and the circle may be highlighted (for example, the top two explanatory variables are displayed to be larger by multiplying the values of the contribution degrees by a coefficient).

In Fig. 7, diagonal lines indicate green as a first color, and dots indicate red as a second color. According to drawing specifications in the embodiment, as the difference between the rating of the explanatory variable and the reference rating increases, the coloring becomes darker. In Fig. 7, since the "sense of understanding of problems," "product," and "cost performance" are colored in green, it can be instantly recognized that their ratings are higher than the reference rating. In addition, since the objective variable "contract intention" and the explanatory variables "sense of satisfaction with solutions," "person in charge," and "perceived fit" are colored in red, it can be instantly recognized that their ratings are lower than the reference rating, and that the rating of the "perceived fit," which is colored in especially dark red, is strikingly low.

Further, a pair of explanatory variables with a specific correlation coefficient are displayed by connecting them with a correlation degree display line. That is, the analysis result output means can display the correlation degree display line connecting a pair of figures corresponding to the explanatory variables using a line with a thickness and/or type according to the value of the correlation coefficient (the strength of the relevance). The correlation degree display line of the embodiment employs a rule in which, when the value is rounded to the least significant digit of significant figures, a correlation degree display line with a rounded value equal to or more than 0.7 is displayed as a double line, the line with a rounded value of less than 0.7 and equal to or more than 0.6 is displayed as a thick solid line, the line with a rounded value of less than 0.6 and equal to or more than 0.5 is displayed as a solid line of normal thickness, the line with a rounded value of less than 0.5 and equal to or more than 0.4 is displayed as a thin dotted line, and the line with a rounded value of less than 0.4 is not displayed. Thus, the correlation coefficients between the respective explanatory variables can be visually and easily grasped by graphically displaying the correlation coefficients between the respective explanatory variables using correlation degree display lines with different thicknesses and types. For example, it is possible to easily grasp, from the correlation degree display lines with different thicknesses and types, that the sense of satisfaction with solutions has a particularly strong correlation with the sense of understanding of problems, followed by a particularly strong correlation with the product, and then a relatively strong correlation with the person in charge.

Thus, by graphically visualizing and providing the magnitude of the contribution degrees of the respective evaluation factors with respect to the contract intention score and the correlation degrees of the respective explanatory variables, which change in association with the effort for improvement, the analysis result output means can provide an insight into an effective effort for the improvement. In the embodiment, while circles with a size proportional to the contribution degrees are used to represent the explanatory variables, the figure indicating the contribution degree is not limited thereto, and any figure can be used. For example, it may be a polygon or an illustration of a food or character. In addition, the arrangement order of the figures indicating the explanatory variables can be configured such that it can be replaced by dragging operations.

As described above, the information providing system 1 according to the embodiment allows appropriately and easily grasping factors that have affected the introduction intention by conducting the multivariate analysis of the objective variable and the explanatory variables (evaluation factors) (when analysis targets are companies that have already introduced the target product, it is possible to appropriately and easily grasp the factors that contribute to designing of measures for customer success.).

In addition, by providing the graphically visualized analysis result obtained from the multivariate analysis, the objective variable for efficiently implementing an effort for improvement can be instantly grasped.

Further, by providing the graphically visualized explanatory variables with a high correlation coefficient, influence can be easily predicted when the explanatory variables are improved.

### <Second Embodiment>

An information providing system 1 of a second embodiment is configured to easily grasp evaluation factors that affect a revisit intention or recommendation intention through a graphic representation of the evaluation factors by analyzing evaluation factors in a specific business category. The following mainly describes the differences from the first embodiment, and the description of identical parts is omitted.

The information providing system 1 according to the second embodiment includes the information providing device 10 that functions as a server, the management information terminal 20 that functions as a management client, the information terminal 30 that a customer uses, the survey data collecting device 40, and Internet 50, and the hardware configuration is the same as that of the first embodiment.

The survey data input means included in the survey data collecting device 40 of the embodiment inputs the survey data on a customer satisfaction level based on the answers from store users, as survey data, into the database 122. In the database 122 of the second embodiment, data from a monitoring survey is stored in addition to data from a questionnaire survey as the survey data.

In the embodiment, the computing unit 11 of the information providing device 10 also executes the analysis program 121 stored in the storage unit 12, thereby achieving (2-1) a survey data acquisition means, (2-2) a multivariate analysis means, and (2-3) an analysis result output means. The following describes each of the means.

### (2-1) Survey Data Acquisition Means

The survey data acquisition means included in the information providing device 10 provides the management information terminal 20 with a screen to which a query for acquiring the survey data from the database 122 is input.

The monitoring survey in the embodiment is a survey in which a monitor (surveyor) actually uses a service of a store, and answers predetermined questions based on his/her own experience. In the monitoring survey, since a reward is paid to the surveyor, the number of questions can be increased. On the other hand, compared with the questionnaire survey, it is difficult to conduct a reliable multivariate analysis with only the monitoring survey depending on the number of samples in some cases.

The questionnaire survey in the embodiment is an in-store questionnaire with predetermined evaluation items, and the number of questions is equal to or less than half that of the monitoring survey. The questionnaire survey includes questions appropriate for conducting the multivariate analysis. On the other hand, compared with the monitoring survey, the number of samples can be increased (for example, one hundred or more can be collected in a single month for one store). Therefore, the questionnaire survey is appropriate for conducting a statistical analysis. Since the number of samples is large in the questionnaire survey, an evaluation trend for each customer segment categorized by evaluation attributes, such as respondents' gender, age, earnings or income, resident area, purpose of use, and used amount of money, can be grasped.

**In** the embodiment, the monitoring survey data and the questionnaire survey data can be used in combination, and while allowing the statistical analysis on the strength of influence of major evaluation items on an overall satisfaction level by business category, problems can be grasped at specific business levels through the monitoring survey.

The evaluation items listed on each survey sheet are, for example, items regarding Quality Service Cleanliness Atmosphere (QSCA). For a target store in the food and beverage category, items, such as "customer service," "service speed," "food," "cleanliness," "space and atmosphere," and "cost performance," are exemplified. For a target store in the beauty category, items, such as "customer service," "counseling," "technique," "cleanliness," "atmosphere," "cost performance," are exemplified.

In any business type, questions required to compute regression with the revisit intention are set. In addition, questions for computing regression with a recommendation intention for others as to whether to want to recommend the use of the target store to other people may be set.

The above-described items are examples, and tens of items may be set depending on the business type (category) and scale of the target store, season, and the like.

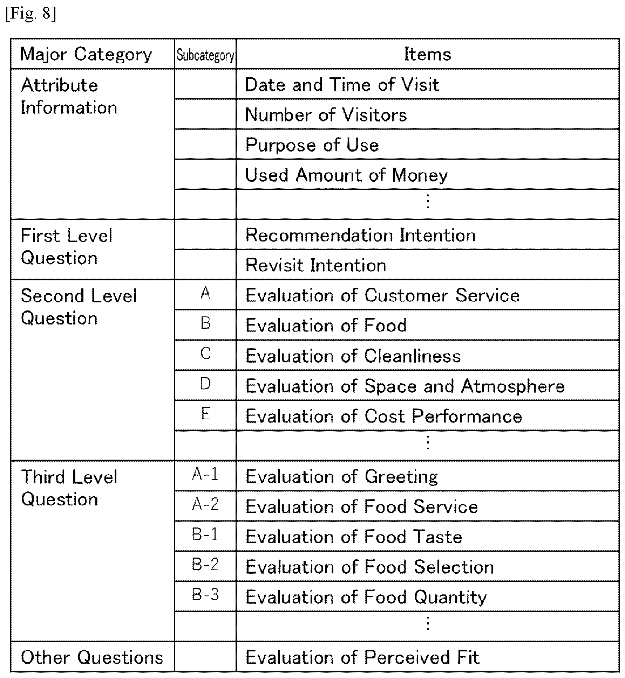

Fig. 8 is a drawing illustrating an exemplary survey sheet for the monitoring survey in the embodiment.

In each item of attribute information, evaluation attribute information of a surveyor who performs the monitoring survey is input. Information on age, gender, residence, and the like of the monitoring surveyor is preliminarily registered and, therefore, not entered on the survey sheet.

A first level question includes a recommendation intention and a revisit intention. The first level question is used as an objective variable in a multiple regression analysis described below. An evaluation of the first level question is, for example, a multi-level evaluation of 0 to 10 points. A second level question is a factor affecting the first level question as the objective variable. A third level question is an explanatory variable when the multiple regression analysis is conducted using the second level question as a dependent variable. Here, the second level question and the third level question are in a relation of a superordinate concept and a subordinate concept. For example, the subordinate concept of "evaluation of customer service" in a subcategory A of the second level question is "evaluation of greeting" and "evaluation of food service" in a subcategory A of the third level question. However, the third level question is not necessarily set for all the subcategories of the second level question. As another question corresponding to the second level question, an evaluation of perceived fit may be set. The question about the perceived fit is, for example, a multi-level evaluation to a question about "Do you feel our store suits your taste?" While a third level question for describing the question about the perceived fit is not set in the embodiment, the third level question may be set.

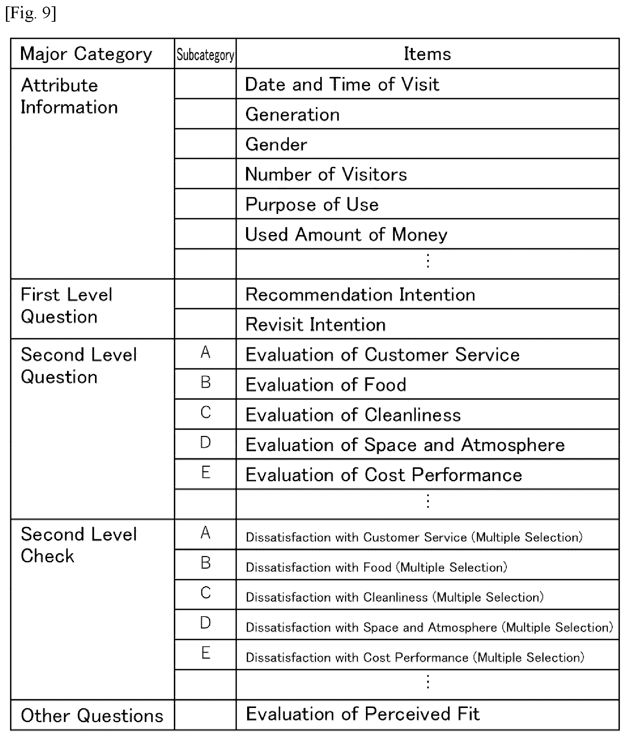

Fig. 9 is a drawing illustrating an exemplary survey sheet for the questionnaire survey in the embodiment.

In each item of attribute information, attribute information of a questionnaire respondent is input. Since the questionnaire respondent is not a registered respondent like the surveyor of the monitoring survey, the questionnaire respondent inputs evaluation attribute information on age, gender, and the like.

A first level question is the same as that of the monitoring survey, and includes items of the recommendation intention and the revisit intention. In the questionnaire survey, to reduce the load on the customer as a respondent, the number of questions used as observation variables is set to be small, and in the embodiment, a second level question and a second level check constitute the questions. Here, the second level question and the second level check correspond to one another in the subcategory. For example, the second level check corresponding to "evaluation of customer service" in the subcategory A of the second level question is "dissatisfaction with customer service (multiple selection)." From another perspective, the second level check can be explained as one with which the third level question performed in the multi-level evaluation is replaced in a multi-level evaluation. Also in the questionnaire survey, as other questions corresponding to the second level question, the evaluations about perceived fit and satisfaction are provided.

The perceived fit in the embodiment is a preference structure of an individual A expressed as a variable, for example, a preference of an individual for an object, a feeling of preference to an option ***b*** over an option ***a*** of the individual A, an efficacy ***b*** greater than an efficacy ***a***. The perceived fit is positioned as a variable including a lifestyle factor, a reference group effect, and the like with comfort or harmony with respect to the space and atmosphere of a survey target as an explanatory variable. By including the perceived fit considering the preference of the respondent of the monitoring survey and the questionnaire survey in the evaluation items, a function that allows outputting a correlation between the perceived fit and the clustered customer attribute may be provided to the multivariate analysis means described below.

### (2-2) Multivariate Analysis Means

The multivariate analysis means of the embodiment analyzes how the respective evaluation items affect a score of the recommendation intention and a score of the revisit intention (hereinafter referred to as a "revisit intention score") by a multiple regression analysis.

In the embodiment, an evaluation factor that can be improved by an effort is set as an explanatory variable, and an evaluation factor difficult to be improved by an effort, for example, location and appearance, is not set as an explanatory variable. Specifically, "customer service," "food," "cleanliness," "space and atmosphere," "cost performance," and the like are set as the explanatory variables of an eating place, and a monitoring survey and a questionnaire survey with evaluation items according to the explanatory variables and evaluation items for calculating the revisit intention score as questions were conducted. Fig. 9 is a drawing illustrating an exemplary result of the calculating contribution degrees of the respective explanatory variables with respect to the revisit intention score (objective variable) by the multiple regression analysis when the target store is an eating place.

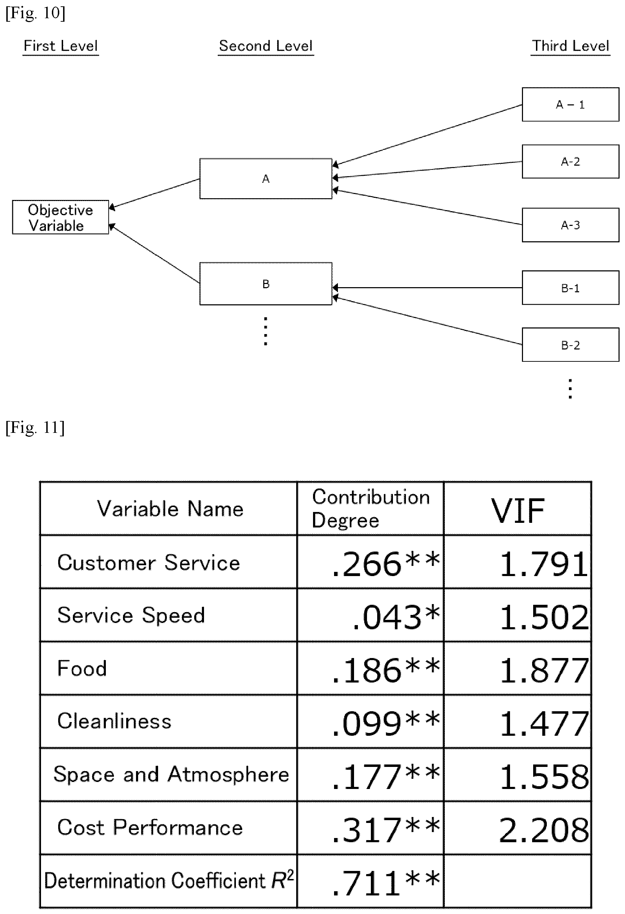

Fig. 10 is a drawing describing the multivariate analysis means according to the embodiment.

The multivariate analysis means of the embodiment conducts (a) a multiple regression analysis of the second level and the third level, (b) an analysis of a simple correlation of the evaluation factors in the third level, (c) a multiple regression analysis of the first level and the second level, and (d) an analysis of a simple correlation of the evaluation factors in the second level. In the embodiment, by conducting a hierarchical multiple regression analysis, the explanatory power of the influence (contribution degrees) of the evaluation factors of the second level on the recommendation intention or the revisit intention can be enhanced. In other words, when the multiple regression analysis is conducted using the evaluation factors of the third level as the explanatory variables and the evaluation value for the evaluation item of the first level as the objective variable, it is not possible to accurately grasp which evaluation factor is dominant in some cases. However, in the embodiment, this problem is solved by setting the evaluation factors of the second level as intermediate concepts.

The analysis (a) is a first multiple regression analysis using the evaluation items of the second level as the objective variables (intermediate objective variables) and the evaluation items of the third level as the explanatory variables. This analysis allows grasping the evaluation items (evaluation factors) of the third level that affect the evaluation items (intermediate objective variables) of the second level. For example, in Fig. 3, the influence (contribution degree) of each of the evaluation of food taste (B-1), the evaluation of food selection (B-2), and the evaluation of food quantity (B-3) on the evaluation of food (B) can be quantified.

In the analysis (b), the correlation between the evaluation factors of the third level is quantified. For example, in Fig. 8, in the case where the high correlation between the evaluation of food selection (B-2) and the evaluation of food quantity (B-3) is recognized by the simple correlation analysis method, it is found that when the evaluation of one becomes better, the evaluation of the other also becomes better.

The analysis (c) is a second multiple regression analysis using the evaluation item of the first level as the objective variable and the evaluation items of the second level as the explanatory variables. This analysis allows grasping the evaluation items (evaluation factors) of the second level that affect the evaluation item of the first level. For example, in Fig. 8, the influence (contribution degree) of each of the evaluation of customer service (A), the evaluation of food (B), the evaluation of cleanliness (C), the evaluation of space and atmosphere (D), and the evaluation of cost performance (E) on the recommendation intention or the revisit intention can be quantified.

In the analysis (d), correlation coefficients obtained by quantifying the correlations between the evaluation factors of the second level are calculated. For example, in Fig. 8, in the case where the high correlation between the evaluation of food (B) and the evaluation of cost performance (E) is recognized by the simple correlation analysis method, it is found that when the evaluation of one becomes better, the evaluation of the other also becomes better.

Fig. 11 is a drawing illustrating an analysis result indicating the contribution degrees of the respective explanatory variables (evaluation factors) of the second level when the revisit intention of the first level is used as the objective variable in a specific eating place. In the example illustrated in Fig. 11, it is seen that the "cost performance" is the highest in contribution degree with respect to the revisit intention, and the contribution degree of the "customer service" is the next highest. Since the values of VIF of the respective explanatory variables are not large, it is seen that the problem of multicollinearity has not occurred. In Fig. 6, since the determination coefficient R² is as large as .711, it is seen that the analysis provides a high explanatory power.

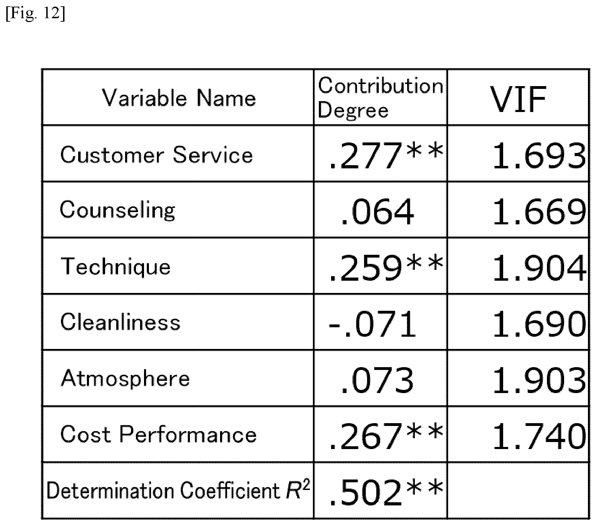

In addition, in the embodiment, "customer service," "counseling," "technique," "cleanliness," "atmosphere," and "cost performance" were set as the explanatory variables (evaluation factors) of the second level in a hair salon to conduct a monitoring survey with questions about the evaluation factors of the second level and the evaluation items of the third level corresponding to the subordinate concepts of the second level as questions. Fig. 12 is a drawing illustrating an exemplary result of calculating the contribution degrees of the respective explanatory variables (evaluation factors) of the second level with respect to the customers' revisit intention (objective variable) by the multiple regression analysis when the target store is a hair salon. In the example illustrated in Fig. 12, it is seen that the "customer service," "technique," and "cost performance" are high in contribution degree with respect to the revisit intention. Since the values of VIF of the respective explanatory variables are not large, it is seen that the problem of multicollinearity has not occurred. In Fig. 12, since the determination coefficient R² is .502, it can be said that the analysis provides a sufficient explanatory power.

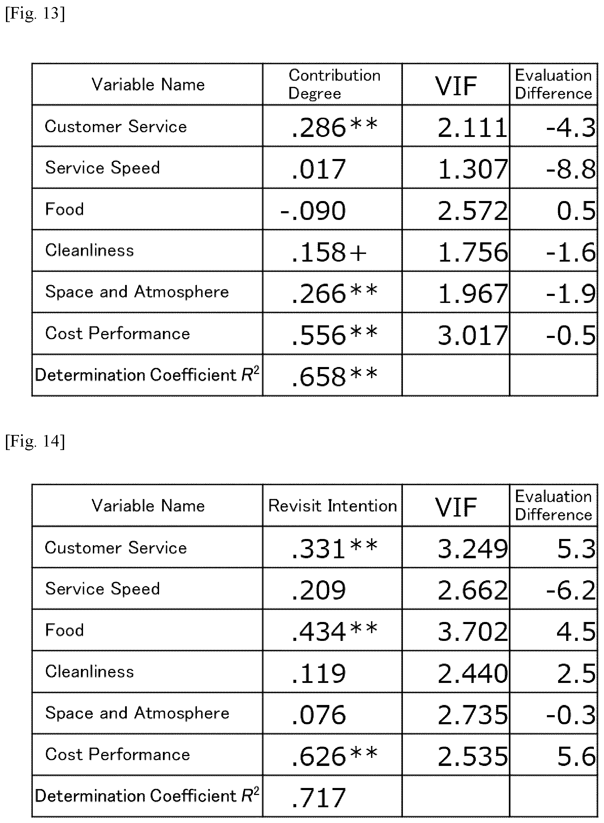

Fig. 13 is a drawing illustrating an analysis result indicating the contribution degrees of the respective explanatory variables (evaluation factors) when the revisit intention is used as the objective variable in an eating place different from that of Fig. 11. In the example illustrated in Fig. 13, it is seen that the "cost performance" is the highest in contribution degree with respect to the revisit intention, and the contribution degree of the "customer service" is the next highest, followed by the contribution degree of the "space and atmosphere." Since the values of VIF of the respective explanatory variables are not large, it is seen that the problem of multicollinearity has not occurred. In addition, in Fig. 13, since the determination coefficient R² is .658, it is seen that the analysis provides a sufficient explanatory power. Furthermore, in Fig. 13, the difference value of each explanatory variable with respect to the average rating as the reference rating for the same business category in the target store is calculated. Here, for the reference rating, the average score of the rating data in the same business category can be used, or any rating targeted by the target store can be used. In addition, the difference value with respect to the reference rating in a business category (for example, a food and beverage business category) that has a superordinate concept of a store that serves a specific type of food or another business category that shares common ingredients (for example, a yakiniku (grilled meat) business category and a teppanyaki (dishes cooked on an iron griddle) business category) may be used. Although not illustrated in Fig. 13, the difference value with respect to the average rating for the revisit intention score in the same business category was calculated, and the difference value was -0.1.

Fig. 14 is a drawing illustrating an analysis result indicating the contribution degrees of the respective explanatory variables (evaluation factors) with respect to the revisit intention as the objective variable when only the data for respondents in their twenties are extracted from the survey data related to Fig. 13. In the example illustrated in Fig. 14, it is seen that the "cost performance" is the highest in contribution degree with respect to the revisit intention, and the contribution degree of the "food" is the next highest, followed by the contribution degree of the "customer service." Therefore, it can be recognized that the explanatory variables with the second-highest or lower contribution degrees are different from those of all generations illustrated in Fig. 13. In addition, for the evaluation difference with respect to the reference rating, all the explanatory variables, which had negative values for all generations, have values exceeding the reference rating, except for two explanatory variables. Therefore, it can be recognized that the evaluation for people in their twenties is high. Although not illustrated in Fig. 14, the difference value with respect to the average rating for the revisit intention score in the same business category was calculated, and the difference value was 5.1.

Since the values of VIF of the respective explanatory variables are not large in Fig. 14, the problem of multicollinearity has not occurred. Also, since the determination coefficient R² is .717, it can be said that the analysis provides a high explanatory power.

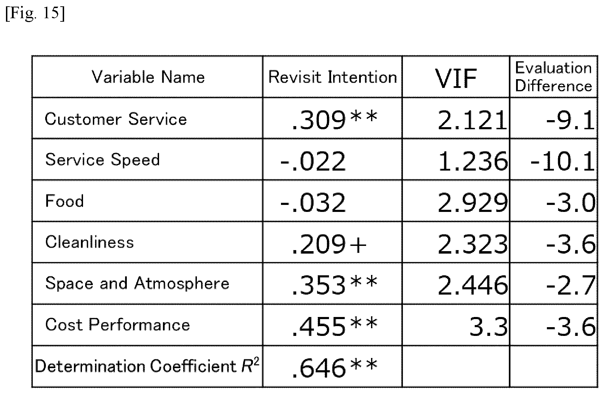

Fig. 15 is a drawing illustrating an analysis result indicating the contribution degrees of the respective explanatory variables (evaluation factors) with respect to the revisit intention as the objective variable when only the data for respondents in their thirties are extracted from the survey data related to Fig. 13. In the example illustrated in Fig. 15, the "cost performance" is the highest in contribution degree with respect to the revisit intention, and the contribution degree of the "space and atmosphere" is the next highest, followed by the contribution degree of the "customer service." Therefore, it can be recognized that the overall trend is close to the permutation of the contribution degrees for all generations illustrated in Fig. 13. In addition, for the evaluation difference with respect to the reference rating, the revisit intention and the respective explanatory variables show lower values (dark red) than the evaluation differences for all generations illustrated in Fig. 8. Therefore, it can be recognized that the evaluation for people in their thirties is particularly low. Although not illustrated in Fig. 15, the difference value with respect to the average rating for the revisit intention score in the same business category was calculated, and the difference value was -2.8.

Since the values of VIF of the respective explanatory variables are not large in Fig. 15, the problem of multicollinearity has not occurred. Also, since the determination coefficient R² is .646, it can be said that the analysis provides a sufficient explanatory power.

### (2-3) Analysis Result Output Means

Similarly to the first embodiment, the analysis result output means of the embodiment is configured to visually grasp the contribution degrees of the explanatory variables with respect to the customers' revisit intention by graphically displaying the contribution degrees. In the embodiment, each explanatory variable is graphically displayed as a circle with a size proportional to the contribution degree with respect to the revisit intention score. In addition, according to drawing specifications, an explanatory variable with a higher rating than the average rating of the same business category is colored in green (diagonal lines), an explanatory variable with a lower rating than the average rating of the same business category is colored in red (dots), and as the difference between the rating of the explanatory variable and the average rating increases, the coloring becomes darker.

Further, similarly to the first embodiment, a pair of explanatory variables with a specific correlation coefficient are displayed by connecting them with a correlation degree display line. That is, the analysis result output means of the second embodiment can also display the correlation degree display line connecting a pair of figures corresponding to the explanatory variables using a line with a thickness and/or type according to the value of the correlation coefficient (the strength of the relevance).

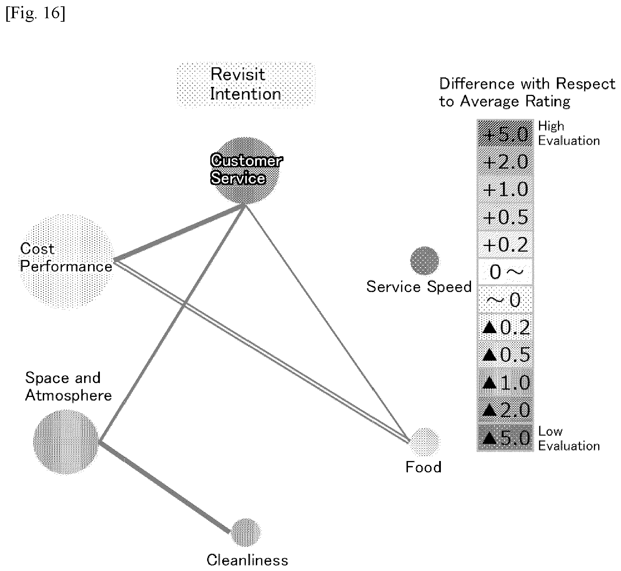

Fig. 16 is a drawing graphically displaying the contribution degrees of the respective explanatory variables with respect to the revisit intention and the correlation coefficients between the respective explanatory variables in the eating place illustrated in Fig. 13 by the analysis result output means. **In** Fig. 16, diagonal lines indicate green as the first color, and dots indicate red as the second color. **In** Fig. 16, since the "customer service" and "service speed" are colored in dark red, it can be instantly recognized that the ratings of the "customer service" and "service speed" are particularly lower than the reference rating of the same business category.

In addition, in Fig. 16, each explanatory variable is drawn using a circle with a size corresponding to the value of the contribution degree with respect to the revisit intention score. From the sizes of the circles in Fig. 16, it can be seen that the "cost performance" has the strongest influence on the revisit intention score, and next, the "space and atmosphere" and "customer service" affect the revisit intention score. Further, since the ratings for the "service speed" and "cleanliness" are rated negative, it can be inferred that ordinary operations are not being carried out. Then, considering the "food" having a circle with a small size and the situation of other explanatory variables, it is possible to determine the evaluation that the "food," which is the original value provided, does not attract attention, but the cost performance has fallen into a battle, without having to examine the numerical values of the contribution degrees, from the graphical radial display of Fig. 11. It should be noted that, similarly to the first embodiment, the arrangement and operation method of the figures indicating the explanatory variables can be changed as appropriate.

In addition, in Fig. 16, the correlation degree between a pair of explanatory variables can be visually grasped from the thickness and type of the correlation degree display line connecting between the explanatory variables. For example, it can be recognized that the "cost performance" is strongly affected by the "food," which is connected thereto by a double-line correlation degree display line, the "cost performance" is significantly affected by the "customer service," which is connected thereto by a thick solid-line correlation degree display line, and the "space and atmosphere" and "food" are considerably affected by the "customer service," which is connected thereto by solid-line correlation degree display lines. Thus, graphically displaying the correlation coefficients between the respective explanatory variables with correlation degree display lines with different thicknesses and types allows easily grasping that the food and the "customer service" have a high correlation with the "cost performance" in the eating place illustrated in Fig. 16, and then, the "space and atmosphere" has a high correlation with the "cleanliness" and "customer service." Pairs of the explanatory variables connected by the correlation degree display lines are not limited to the illustrated top five pairs, and any number of correlation degree display lines may be displayed.

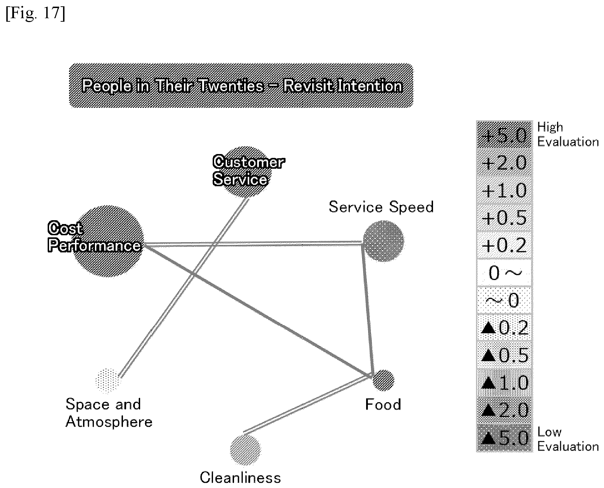

Fig. 17 is a drawing graphically displaying the contribution degrees of the respective explanatory variables with respect to the revisit intention and the correlation coefficients between the respective explanatory variables using the data for respondents in their twenties related to Fig. 14 by the analysis result output means. Since the arrangement of the circles indicating the explanatory variables in Fig. 17 is the same as in Fig. 16, the difference in the contribution degrees of the explanatory variables between all generations and those in their twenties can be easily compared. Here, Fig. 16 and Fig. 17 may be displayed side by side on the same screen.

In Fig. 17, diagonal lines indicate green as the first color, and dots indicate red as the second color. In Fig. 17, since the explanatory variables other than the "service speed" and "space and atmosphere" are colored in dark green, it can be instantly recognized that the ratings of the explanatory variables other than the "service speed" are particularly higher than the average rating of the same business category.

From the sizes of the circles in Fig. 17, it is possible to visually grasp that the "cost performance" has the strongest influence on the revisit intention score, and the contribution degrees of the "customer service" and "service speed" are the next highest. In contrast with Fig. 16, the contribution degree of the "space and atmosphere", which has been the third highest contribution degree for all generations, is low for people in their twenties.

Also, in Fig. 17, the correlation degree between a pair of explanatory variables can be visually grasped from the thickness and type of the correlation degree display line connecting between the explanatory variables. For example, it can be seen that the "cost performance" is strongly affected by the "service speed," which is connected thereto by a double line, and then, affected by the "food," which is connected thereto by a solid line, and the "customer service" is strongly affected by the "space and atmosphere," which is connected thereto by a double line.

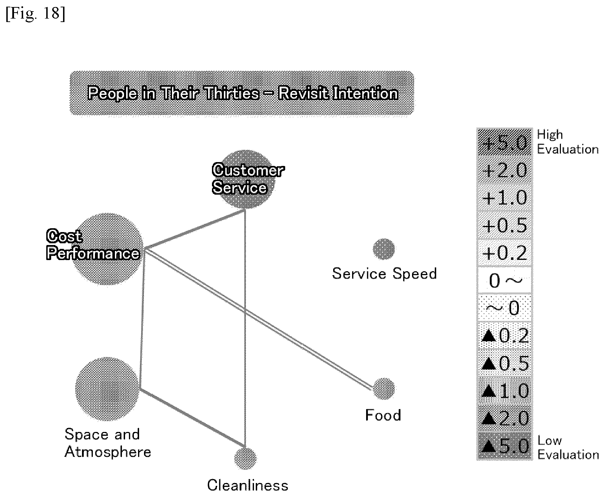

Fig. 18 is a drawing graphically displaying the contribution degrees of the respective explanatory variables with respect to the revisit intention and the correlation coefficients between the respective explanatory variables using the data for respondents in their thirties related to Fig. 15 by the analysis result output means. Since the arrangement of the circles indicating the explanatory variables in Fig. 18 is the same as in Fig. 16, the difference in the contribution degrees of the explanatory variables between all generations and those in their thirties can be easily compared. Here, Fig. 16 or Fig. 17 and Fig. 18 may be displayed side by side on the same screen.

In Fig. 18, diagonal lines indicate green as the first color, and dots indicate red as the second color. In Fig. 18, since the "revisit intention" and all the explanatory variables are colored in red, it can be instantly recognized that the ratings of the "revisit intention" and all the explanatory variables are lower than the average rating.

From the sizes of the circles in Fig. 18, it is possible to visually grasp that the "cost performance" has the strongest influence on the revisit intention score, and the contribution degrees of the "customer service" and "space and atmosphere service" are the next highest. In contrast with Fig. 17, the contribution degree of the "space and atmosphere" is higher than that of those in their twenties.

Also, in Fig. 18, the correlation degree between a pair of explanatory variables can be visually grasped from the thickness and type of the correlation degree display line connecting between the explanatory variables. For example, it can be seen that the "cost performance" is strongly affected by the "food," which is connected thereto by a double line, and then, affected by the "customer service" and "space and atmosphere," which are connected thereto by solid lines.

Thus, by graphically visualizing and providing the magnitude of the contribution degrees of the respective evaluation factors with respect to the revisit intention score, which change in association with an effort for store improvement, the analysis result output means of the embodiment can provide an insight into efficiently implementing the effort for store improvement.

As described above, the information providing system 1 according to the embodiment allows instantly grasping the objective variable for efficiently implementing an effort for improvement by providing the graphically visualized analysis result obtained from the multivariate analysis of the objective variable and the explanatory variables (evaluation factors).

Further, by providing the graphically visualized explanatory variables with a high correlation coefficient, influence can be easily predicted when the explanatory variables are improved.

Furthermore, it is possible to visually grasp the contribution degrees of the evaluation factors with respect to the customers' revisit intention or recommendation intention by evaluation attribute.

### <Third Embodiment>

The hardware configuration of an information providing system 1 according to a third embodiment is the same as those of the first and second embodiments. The third embodiment is different from the second embodiment in that a multivariate analysis means executed in the information providing device 10 has a function to analyze how the respective evaluation items affect the score of the repurchase intention for a specific product by a multiple regression analysis.

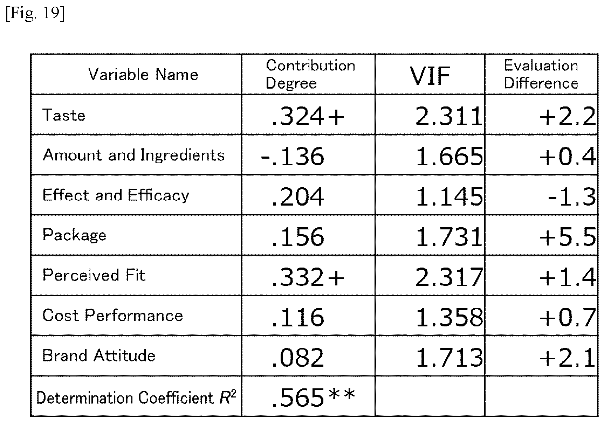

Fig. 19 is a drawing illustrating an analysis result indicating the contribution degrees of the respective explanatory variables (evaluation factors) of the second level when the repurchase intention of the first level is used as the objective variable in a specific beverage (what is called an energy drink). In the example illustrated in Fig. 19, it is seen that the "perceived fit" is the highest in contribution degree with respect to the repurchase intention, and the contribution degree of "taste" is the next highest. Since the values of VIF of the respective explanatory variables are not large, it is seen that the problem of multicollinearity has not occurred. In addition, in Fig. 19, since the determination coefficient R² is .565, it is seen that the analysis provides a sufficient explanatory power. Furthermore, in Fig. 19, the difference value of each explanatory variable with respect to the average rating for the same kind of beverages is calculated.

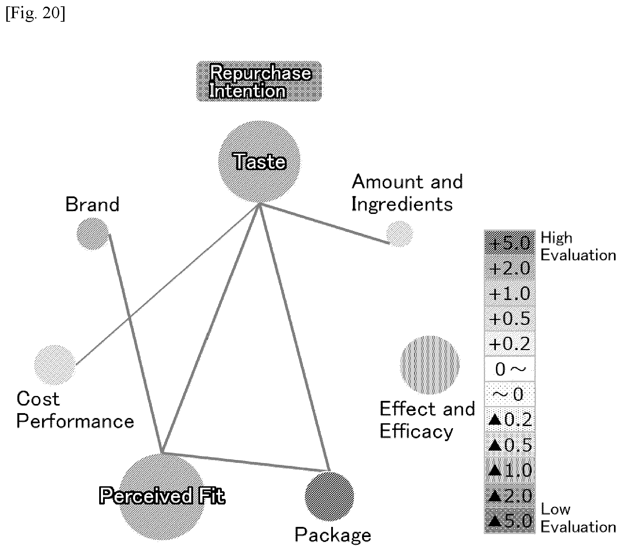

The analysis result output means of the embodiment is configured to visually grasp the contribution degrees of the explanatory variables with respect to the customers' repurchase intention by graphically displaying the contribution degrees. Fig. 20 is a drawing graphically displaying the contribution degrees of the respective explanatory variables with respect to the repurchase intention and the correlation coefficients between the respective explanatory variables for the specific beverage illustrated in Fig. 19 by the analysis result output means. Similarly to the first and second embodiments, an explanatory variable with a high contribution degree with respect to the repurchase intention is displayed in a large circle, while an explanatory variable with a low contribution degree is displayed in a small circle. In addition, the circles corresponding to the respective explanatory variables are arranged at the vertices of an approximately regular heptagon. In Fig. 20, diagonal lines indicate green as the first color, and dots indicate red as the second color.

Similarly to the first and second embodiments, in the embodiment, according to drawing specifications, an explanatory variable with a higher rating than the reference rating is colored in green (diagonal lines), an explanatory variable with a lower rating than the reference rating is colored in red (dots), and as the difference between the rating of the explanatory variable and the reference rating increases, the coloring becomes darker. In Fig. 20, since the "package" is colored in dark green, it can be instantly recognized that the rating is particularly higher than the reference rating. In addition, since the "repurchase intention" and "effect and efficacy" are colored in red, it can be instantly recognized that their ratings are lower than the reference rating, and the "effect and efficacy" has a negative impact on the "repurchase intention."

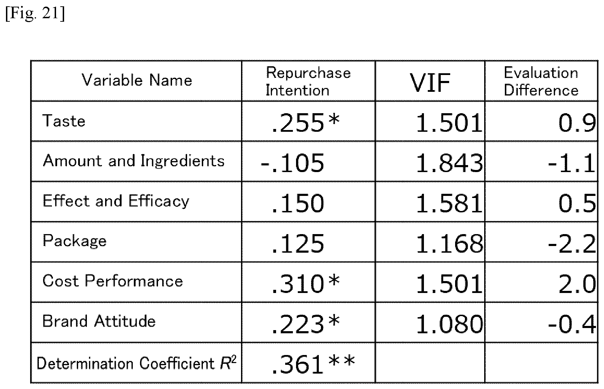

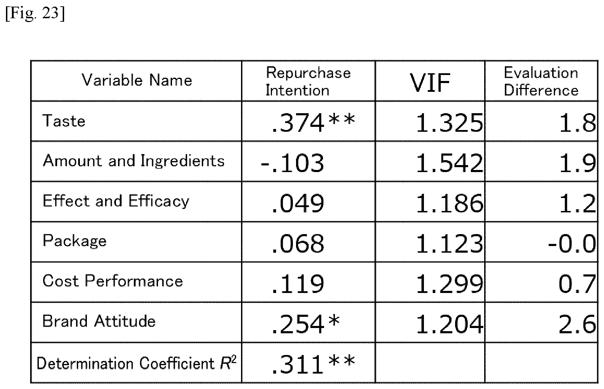

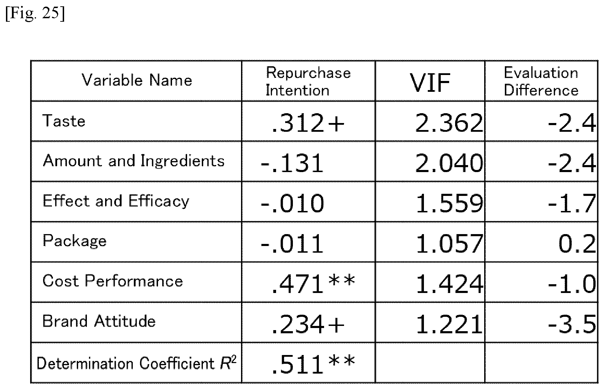

Fig. 21 is a drawing illustrating an analysis result indicating the contribution degrees of the respective explanatory variables (evaluation factors) with respect to the repurchase intention as the objective variable when only the data for male respondents are extracted from the survey data related to Fig. 19. However, in Fig. 21, the analysis is conducted by excluding the "perceived fit" from the explanatory variables in Fig. 19. While the "perceived fit" is excluded in Fig. 21, one or two or more explanatory variables different from it may be excluded to conduct an analysis (the same applies to Figs. 23 and 25 described below). In the example illustrated in Fig. 21, it can be seen that the "cost performance" is the highest in contribution degree with respect to the repurchase intention, and the contribution degree of the "taste" is the next highest, followed by the contribution degree of the "brand attitude." In addition, for the evaluation difference with respect to the reference rating, it can be recognized that the ratings of the "amount and ingredients," "package," and "brand attitude" fall below the reference rating.

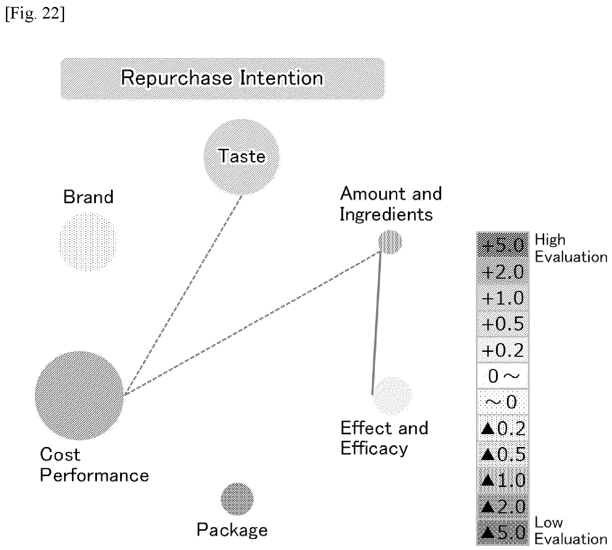

Fig. 22 is a drawing graphically displaying the contribution degrees of the respective explanatory variables with respect to the repurchase intention and the correlation coefficients between the respective explanatory variables using the data for male respondents related to Fig. 21 by the analysis result output means. In Fig. 22, the number of explanatory variables excluding the "cost performance" is six, and the respective explanatory variables are arranged at the vertices of a regular hexagon. Here, Fig. 22 and Fig. 20 may be displayed side by side on the same screen.

In Fig. 22, diagonal lines indicate green as the first color, and dots indicate red as the second color. In Fig. 22, since the "amount and ingredients," "package," and "brand attitude" are colored in red, it can be instantly recognized that their ratings are lower than the average rating of the same kind of beverages. Then, since other explanatory variables and the objective variable are colored in green, their ratings are higher than the average rating of the same kind of beverages.

From the sizes of the circles in Fig. 2, it is possible to visually grasp that the "cost performance" has the strongest influence on the repurchase intention score, and the contribution degrees of the "taste" and "brand" are the next highest. In addition, the correlation degree between a pair of explanatory variables can be visually grasped from the thickness and type of the correlation degree display line connecting between the explanatory variables. For example, it can be seen that the "cost performance" is affected by the "taste" and "amount and ingredients," which are connected thereto by dotted lines, and the "amount and ingredients" is strongly affected by the "effect and efficacy," which is connected thereto by a solid line.

Fig. 23 is a drawing illustrating an analysis result indicating the contribution degrees of the respective explanatory variables (evaluation factors) with respect to the repurchase intention as the objective variable when only the data for respondents aged under 40 are extracted from the survey data related to Fig. 19. However, in Fig. 23, the analysis is conducted by excluding the "perceived fit" from the explanatory variables in Fig. 19. In the example illustrated in Fig. 23, it can be seen that the "taste" is the highest in contribution degree with respect to the repurchase intention, and the contribution degree of the "brand attitude" is the next highest. In addition, for the evaluation difference with respect to the reference rating, it can be recognized that the ratings of all the explanatory variables, except the "package," exceed the reference rating.

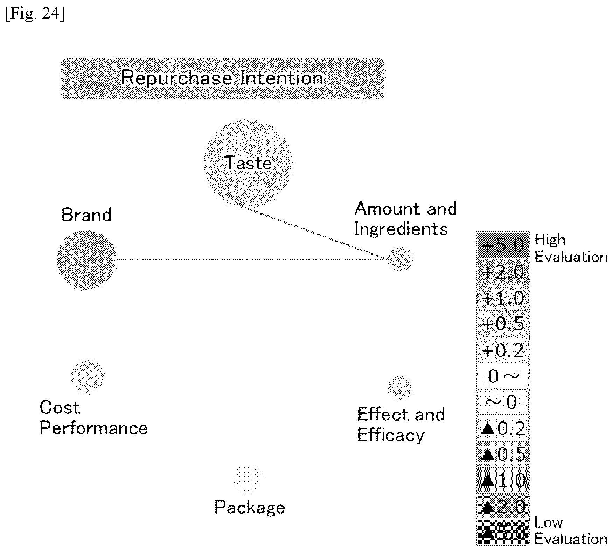

Fig. 24 is a drawing graphically displaying the contribution degrees of the respective explanatory variables with respect to the repurchase intention and the correlation coefficients between the respective explanatory variables using the data for respondents aged under 40 related to Fig. 23 by the analysis result output means. In Fig. 24, the number of explanatory variables excluding the "cost performance" is six, and the respective explanatory variables are arranged at the vertices of a regular hexagon. Here, Fig. 24 and Fig. 20 may be displayed side by side on the same screen.

In Fig. 24, diagonal lines indicate green as the first color, and dots indicate red as the second color. In Fig. 24, since the explanatory variables other than the "package" and the objective variable are colored in green, it can be instantly recognized that their ratings are higher than the average rating of the same kind of beverages.

From the sizes of the circles in Fig. 24, it is possible to visually grasp that the "taste" has the strongest influence on the repurchase intention score, followed by the "brand attitude." In addition, the correlation degree between a pair of explanatory variables can be visually grasped from the thickness and type of the correlation degree display line connecting between the explanatory variables. For example, it can be seen that the "taste" is affected by the "amount and ingredients," which is connected thereto by a dotted line.

Fig. 25 is a drawing illustrating an analysis result indicating the contribution degrees of the respective explanatory variables (evaluation factors) with respect to the repurchase intention as the objective variable when only the data for respondents aged 40 and above are extracted from the survey data related to Fig. 19. However, in Fig. 25, the analysis is conducted by excluding the "perceived fit" from the explanatory variables in Fig. 19. In the example illustrated in Fig. 20, it can be seen that the "taste" is the highest in contribution degree with respect to the repurchase intention, and the contribution degree of the "brand attitude" is the next highest. In addition, for the evaluation difference with respect to the reference rating, it can be recognized that the ratings of all the explanatory variables, except the "package," fall below the reference rating.

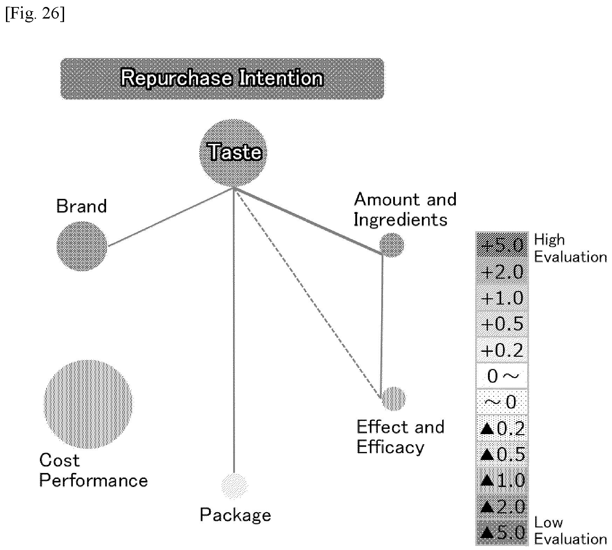

Fig. 26 is a drawing graphically displaying the contribution degrees of the respective explanatory variables with respect to the repurchase intention and the correlation coefficients between the respective explanatory variables using the data for respondents aged 40 and above related to Fig. 25 by the analysis result output means. In Fig. 26, the number of explanatory variables is six, and the respective explanatory variables are arranged at the vertices of a regular hexagon. Here, Fig. 26 and Fig. 20 or Fig. 26 and Fig. 24 may be displayed side by side on the same screen.

In Fig. 26, diagonal lines indicate green as the first color, and dots indicate red as the second color. In Fig. 26, since the explanatory variables other than the "package" and the objective variable are colored in red, it can be instantly recognized that their ratings are lower than the average rating of the same kind of beverages. In addition, when compared with Fig. 24, it can be seen that all the evaluations of the respective explanatory variables are high for those aged under 40, whereas all the evaluations of the respective explanatory variables are low for those aged 40 and above.

From the sizes of the circles in Fig. 26, it is possible to visually grasp that the "cost performance" has the strongest influence on the repurchase intention score, followed by the "taste." In addition, the correlation degree between a pair of explanatory variables can be visually grasped from the thickness and type of the correlation degree display line connecting between the explanatory variables. For example, it can be seen that the "taste" is strongly affected by the "brand attitude," "amount and ingredients," and "package," which are connected thereto by solid lines, and then, affected by the "effect and efficacy," which is connected thereto by a dotted line.

While the examples of the preferred embodiments of the present invention are described above, the technical scope of the present invention is not limited to the description of the embodiments. Various changes and modifications can be made in the examples of the embodiments, and configurations with the changes and modifications are also included in the technical scope of the present invention.

For example, the above-described embodiment exemplifies the configuration in which the contribution degrees of the respective evaluation factors with respect to the contract intention score are obtained using the multiple regression analysis in the multivariate analysis. However, the configuration is not limited thereto, and a principal component analysis, a factor analysis, a correspondence analysis, a multidimensional scaling method, a cluster analysis, a path analysis, a variance analysis, a conjoint analysis, a regression analysis, a logistic regression analysis, and the like may be used.

In addition to the above-described embodiment, the information providing device 10 can have a configuration in which the evaluation factor contributing to the contract intention or recommendation intention for others is analyzed by collecting condition information, for example, the customer segment, the scene of use (daily use, anniversary use, and the like), season, and weather, and factoring in the condition information. In addition, by adding graphic and psychographic attributes to the questionnaires, it is possible to analyze by customer segment. Further, by linking with Point of Sales (POS) and purchase history management systems, it is also possible to grasp evaluation trends for each ordered product.

The above-described embodiment describes an example in which the explanatory power of the influence (contribution degrees) of the evaluation factors on the contract intention or recommendation intention for others by conducting only the multivariate analysis using the evaluation factor of the first level as the objective variable and the evaluation factors of the second level as the explanatory variables. However, the technical idea of the present invention is also applicable to a multivariate analysis using hierarchical evaluation factors. For example, a multivariate analysis means may be established, which conduct (a) a multiple regression analysis of the evaluation factors of the second level and the evaluation factors of the third level, (b) a correlation analysis of the evaluation factors of the second level and the evaluation factors of the third level, (c) a multiple regression analysis of the evaluation factor of the first level and the evaluation factors of the second level, and (d) a correlation analysis between the evaluation factors of the second level. Such a multivariate analysis is effective because it may be possible to grasp the dominant evaluation factor even if it is not possible to accurately determine which evaluation factor is dominant by a nonhierarchical multivariate analysis alone.

While the example using the survey data on computer software as the target is described in the above-described embodiment, the present invention is applicable to business types that handle other products or services, and applicable to, for example, accommodation industry, food and beverage industry, entertainment industry, daily service industry, such as hair dressing and beauty and public bath, liberal arts and skill education industry, financial industry, insurance industry, retailing industry, information and communication industry, rental business, specialty service business (professionals and the like), advertising industry, real estate industry, and transportation industry.

### DESCRIPTION OF REFERENCE SIGNS

- 1: Information providing system
- 10: Information providing device
- 20: Management information terminal
- 30: Information terminal
- 40: Survey data collecting device
- 50: Internet

## Claims

1. An information providing device comprising:
a survey data acquisition means configured to acquire evaluation data including evaluation values for evaluation items for a target product or service, the evaluation data including evaluation values for a plurality of evaluation items related to a contract intention;
a multivariate analysis means configured to calculate contribution degrees of a plurality of explanatory variables with respect to an objective variable by conducting a multivariate analysis based on the evaluation data using an evaluation value for the contract intention as the objective variable, and evaluation values for a plurality of evaluation items in the evaluation data as the explanatory variables; and
an analysis result output means configured to display an analysis result from the multivariate analysis means on an information terminal capable of communicating via a network,
wherein the evaluation data includes an evaluation item of a first level corresponding to the objective variable, evaluation items of a second level that explain the objective variable, and evaluation items of a third level that explain evaluation items of the second level, and
the multivariate analysis means is configured to execute a first multivariate analysis using an evaluation value for an evaluation item of the second level as an intermediate objective variable, and evaluation items of the third level as explanatory variables, and execute a second multivariate analysis using an evaluation item of the first level as an objective variable and evaluation items of the second level as explanatory variables.

2. The information providing device according to claim 1, wherein the analysis result output means is configured to display the plurality of explanatory variables on the information terminal with figures of sizes corresponding to the contribution degrees.

3. The information providing device according to claim 1, further comprising
a correlation analysis means configured to calculate a relevance between the plurality of explanatory variables,
wherein the analysis result output means is configured to display a line connecting a pair of the explanatory variables on the information terminal, the line having a thickness and/or type according to a strength of the relevance.

4. The information providing device according to claim 1, further comprising
a reference value setting means configured to set a reference value for each of the plurality of explanatory variables,
wherein the analysis result output means is configured to display the explanatory variables colored in different colors according to a difference with respect to the reference value.

5. The information providing device according to claim 4, wherein the reference value setting means includes a function to calculate an average value for a rating in an identical or similar business type and business category calculated for each of the plurality of explanatory variables and set the average value as the reference value.

6. The information providing device according to claim 4, wherein the analysis result output means is configured to color the explanatory variables in a first color when the explanatory variables are higher than the reference value and color the explanatory variables in a second color different from the first color when the explanatory variables are lower than the reference value.

7. The information providing device according to claim 1, wherein the analysis result output means is configured to radially arrange the figures to display the arranged figures.

8. The information providing device according to any one of claims 1 to 7, wherein evaluation items of the third level are evaluation items of a subordinate concept of evaluation items of the second level.

9. An information providing method executed by a computer, the method comprising:
a step of acquiring evaluation data including evaluation values for evaluation items for a target product or service, the evaluation data including evaluation values for a plurality of evaluation items related to a contract intention;
a step of calculating an evaluation value for the contract intention based on the evaluation data;
a multivariate analysis step of calculating contribution degrees of a plurality of explanatory variables with respect to an objective variable by conducting a multivariate analysis using an evaluation value for the contract intention as the objective variable, and evaluation values for a plurality of evaluation items in the evaluation data as the explanatory variables; and
an analysis result output step of displaying an analysis result in the multivariate analysis step on an information terminal capable of communicating via a network,
wherein the evaluation data includes an evaluation item of a first level corresponding to the objective variable, evaluation items of a second level that explain the objective variable, and evaluation items of a third level that explain evaluation items of the second level, and
the multivariate analysis step includes executing a first multivariate analysis using an evaluation value for an evaluation item of the second level as an intermediate objective variable, and evaluation values for evaluation items of the third level as explanatory variables, and executing a second multivariate analysis using an evaluation value for an evaluation item of the first level as an objective variable, and evaluation values for evaluation items of the second level as explanatory variables.

10. A program that causes a computer to function as:
a means for acquiring evaluation data including evaluation values for evaluation items for a target product or service, the evaluation data including evaluation values for a plurality of evaluation items related to a contract intention;
a means for calculating an evaluation value for the contract intention based on the evaluation data;
a multivariate analysis means for calculating contribution degrees of a plurality of explanatory variables with respect to an objective variable by conducting a multivariate analysis using an evaluation value for the contract intention as the objective variable, and evaluation values for a plurality of evaluation items in the evaluation data as the explanatory variables; and
an analysis result output means for displaying an analysis result from the multivariate analysis means on an information terminal capable of communicating via a network,
wherein the evaluation data includes an evaluation value for an evaluation item of a first level corresponding to the objective variable, evaluation values for evaluation items of a second level that explain the objective variable, and evaluation values for evaluation items of a third level that explain evaluation items of the second level, and
the multivariate analysis means includes executing a first multivariate analysis using an evaluation value for an evaluation item of the second level as an intermediate objective variable, and evaluation values for evaluation items of the third level as explanatory variables, and executing a second multivariate analysis using an evaluation value for an evaluation item of the first level as an objective variable, and evaluation values for evaluation items of the second level as explanatory variables.
